(19) Europäisches Patentamt
European Patent Office
Office européen des brevets

(11) EP 2 308 305 A1

(12) # EUROPÄISCHE PATENTANMELDUNG

(43) Veröffentlichungstag:
**13.04.2011 Patentblatt 2011/15**

(21) Anmeldenummer: **10181197.4**

(22) Anmeldetag: **19.03.2003**

(51) Int Cl.:
***A01N 43/653** (2006.01)* ***A01P 3/00** (2006.01)*
*A01N 47/34 (2006.01)*

(84) Benannte Vertragsstaaten:
**AT BE BG CH CY CZ DE DK EE ES FI FR GB GR HU IE IT LI LU MC NL PT RO SE SI SK TR**

(30) Priorität: **21.03.2002 DE 10212704**

(62) Dokumentnummer(n) der früheren Anmeldung(en) nach Art. 76 EPÜ:
**09157219.8 / 2 080 433**
**07102911.0 / 1 790 226**
**03712051.6 / 1 489 906**

(27) Früher eingereichte Anmeldung:
**19.03.2003 EP 09157219**

(71) Anmelder: **BASF SE**
**67056 Ludwigshafen (DE)**

(72) Erfinder:
- **Ammermann, Eberhard**
  **64646 Heppenheim (DE)**
- **Stierl, Reinhard**
  **Niao Song Shiang**
  **Kaohsiung County 83345 (TW)**
- **Lorenz, Gisela**
  **67434 Neustadt (DE)**
- **Schöfl, Ulrich**
  **Apex, NC 27523 (US)**
- **Strathmann, Siegfried**
  **67117 Limburgerhof (DE)**
- **Schelberger, Klaus**
  **67161 Gönnheim (DE)**
- **Christen, Thomas**
  **67125 Dannstadt (DE)**

Bemerkungen:
Diese Anmeldung ist am 28-09-2010 als Teilanmeldung zu der unter INID-Code 62 erwähnten Anmeldung eingereicht worden.

(54) **Fungizide Mischungen**

(57) Fungizide Mischung, enthaltend
(1) 2-[2-(1-Chlorcyclopropyl)-3-(2-chlorphenyl)-2-hydroxypropyl]-2,4-dihydro-[1,2,4]-triazol-3-thion (Prothioconazole) der Formel I oder dessen Salze oder Addukte und
(14) Thiophanate-methyl der Formel XIV.
in einer synergistisch wirksamen Menge.

EP 2 308 305 A1

## Beschreibung

Die vorliegende Erfindung betrifft fungizide Mischungen, enthaltend

(1) 2-[2-(1-Chlorcyclopropyl)-3-(2-chlorphenyl)-2-hydroxypropyl]-2,4-dihydro-[1,2,4]-triazol-3-thion (Prothioconazole) der Formel I oder dessen Salze oder Addukte

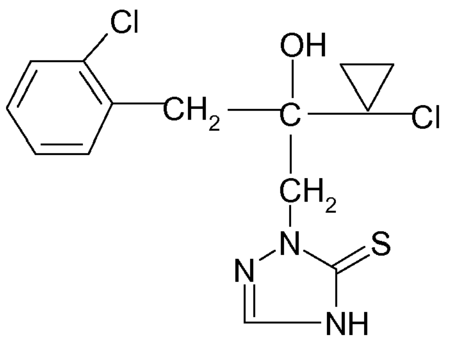

(I)

(Prothioconazole)

und mindestens eine weitere fungizide Verbindung, ausgewählt aus
(4) Metrafenone der Formel IV

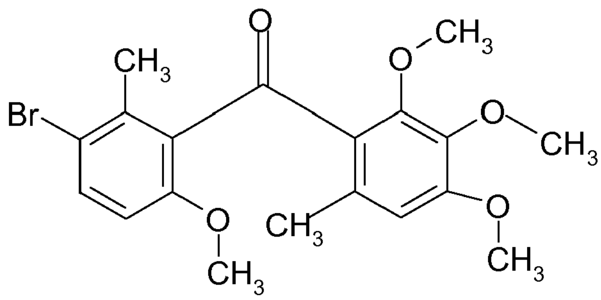

(IV)

oder
(5) eine Verbindung der Formel V

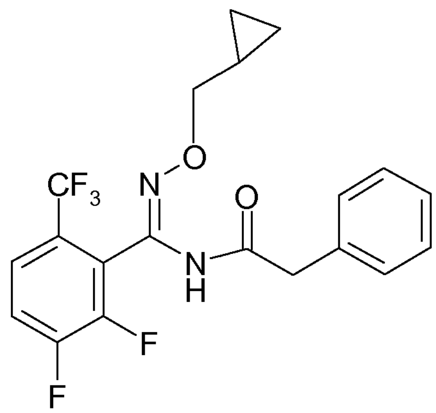

(V)

oder
(6) eine Verbindung der Formel VI

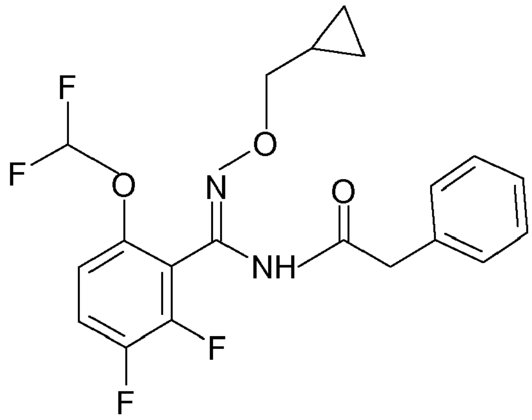

(VI)

oder

(7) Quinoxyfen der Formel VII

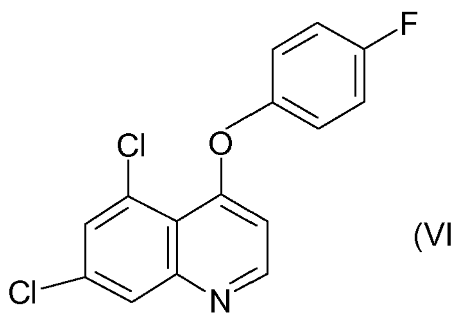

(VII)

oder

(8) Dithianon der Formel VIII

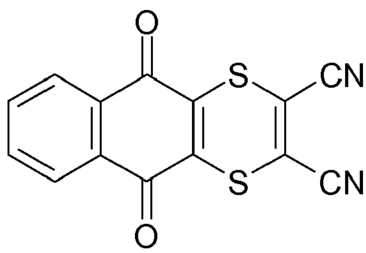

(VIII)

oder

(9) Thiram Formel IX

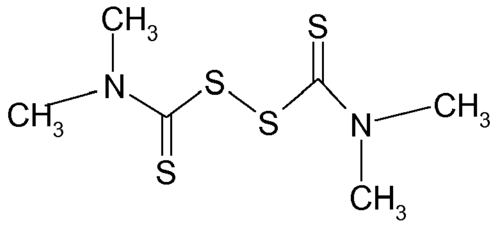

(IX)

oder

(10) Mepiquatchloride der Formel X

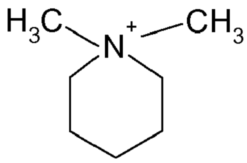

(X)

oder

(11) Cyazofamid der Formel XI

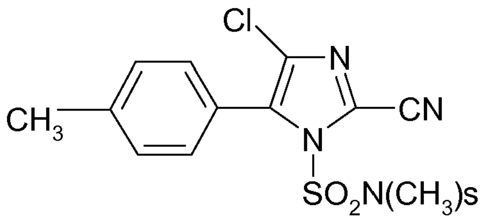

(XI)

oder

(12) Fenoxanil der Formel XII

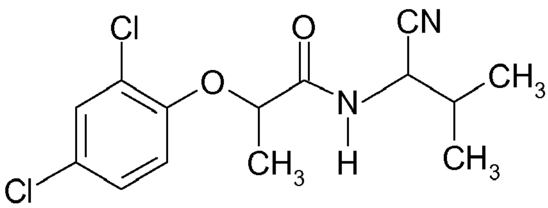

(XII)

oder

(13) eine Verbindung der Formel XIII

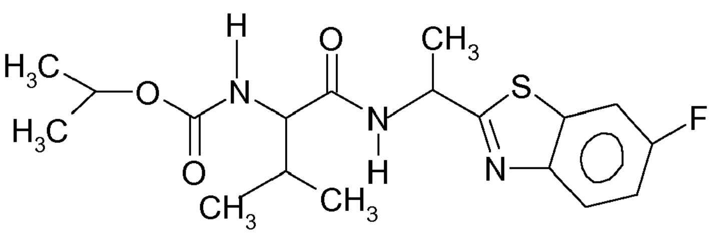

(XIII)

(14) Thiophanate-methyl der Formel XIV

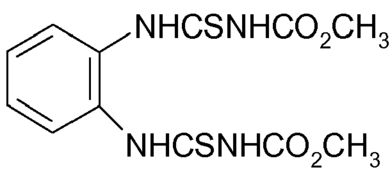

(XIV)

(15) Carbendazim der Formel XV

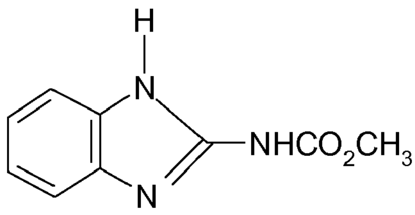

(XV)

oder

(16) Metalaxyl der Formel XVI

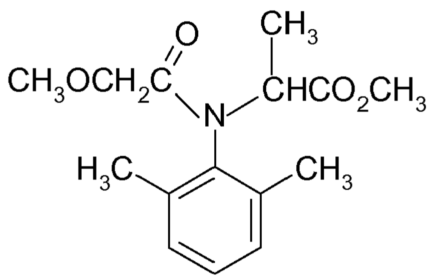

XVI

oder

(17) Fludioxonil der Formel XVII

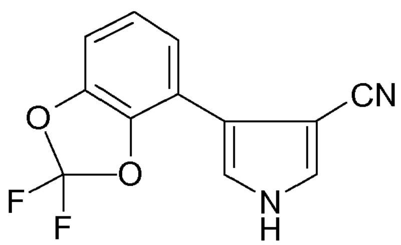

XVII

oder

(18) Thiabendazole der Formel XVIII

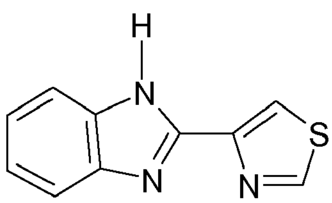

XVIII

oder

(19) Quintozen der Formel XIX

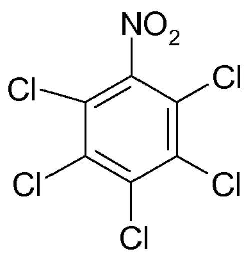

XIX

oder

(20) Prochloraz der Formel XX

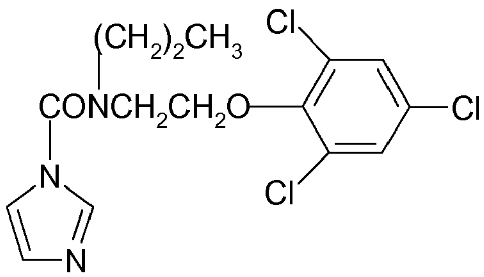

XX

oder

(21) Anthraquinone der Formel XXI

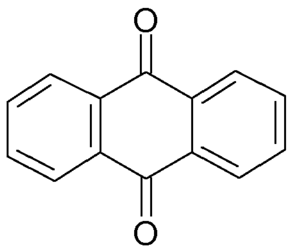

XXI

in einer synergistisch wirksamen Menge.

Außerdem betrifft die Erfindung ein Verfahren zur Bekämpfung von Schadpilzen mit Mischungen der Verbindungen I mit mindestens einer der Verbindungen IV bis XXI und die Verwendung der Verbindungen I mit mindestens einer der Verbindungen IV bis XXI zur Herstellung derartiger Mischungen sowie Mittel, die diese Mischungen enthalten.

Das Prothioconazole der Formel I, das 2-[2-(1-Chlorcyclopropyl)-3-(2-chlorphenyl)-2-hydroxypropyl]-2,4-dihydro-[1,2,4]-triazol-3-thion ist bereits aus der WO 96/16048 bekannt.

Aus der WO 98/47367 ist eine Reihe von Wirkstoffkombinationen von Prothioconazole mit einer Vielzahl anderer fungizider Verbindungen bekannt.

Metrafenone der Formel IV ist bekannt und in der EP-A-727 141, EP-A 897 904, EP-A 899 255 und EP-A-967 196 beschrieben.

Die Verbindung der Formel V ist in WO 96/19442 beschrieben.

Die Verbindung der Formel VI ist in EP-A-1017670, EP-A-1017671 und DE 19753519.4 beschrieben.

Das Quinoxyfen der Formel VII ist aus der EP-A-0 326 330 bekannt.

Das Dithianon der Formel VIII ist in der GB 857 383 beschrieben.

Das Thiram der Formel IX ist in der DE-A-06 42 532 beschrieben.

Das Mepiquatchloride der Formel X ist aus der DE-A-22 07 575 bekannt.

Das Cyazofamid der Formel XI ist in der PCT/EP/02/00237 beschrieben.

Das Fenoxanil der Formel XII ist in der PCT/EP/01/14785 beschrieben.

Die Verbindung der Formel XIII ist in der WO 99/56551 beschrieben.

Das Thiophanate-methyl der Formel XIV ist aus der DE-A-1930540 bekannt.

Das Carbendazim der Formel XV ist in der US 3,657,443 beschrieben.

Das Metalaxyl der Formel XVI ist in der US 4,151,299 beschrieben.

Das Fludioxonil der Formel XVII ist aus der EP-A-206 999 bekannt.

Das Thiabendazole der Formel XVIII ist aus der US 3,017,415 bekannt.

Das Quintozene der Formel XIX ist in der Formel DE-A-682048 beschrieben.

Das Prochloraz der Formel XX ist in der US 3,991,071 beschrieben.

Das Anthraquinone der Formel XXI ist in Pesticide Manual, 12th Ed. (2000), Seite 39 beschrieben.

Im Hinblick auf eine Senkung der Aufwandmengen und eine Verbesserung des Wirkungsspektrums der bekannten Verbindungen I bis XXI lagen der vorliegenden Erfindung Mischungen als Aufgabe zugrunde, die bei verringerter Gesamtmenge an ausgebrachten Wirkstoffen eine verbesserte Wirkung gegen Schadpilze aufweisen (synergistische Mischungen).

Demgemäß wurde die eingangs definierte Mischung von Prothioconazole mit mindestens einem weiteren Fungizid gefunden. Es wurde außerdem gefunden, daß sich bei gleichzeitiger, und zwar gemeinsamer oder getrennter Anwendung der Verbindungen I und mindestens einer der Verbindungen IV bis XXI oder bei Anwendung der Verbindungen I und mindestens eine der Verbindungen IV bis XXI nacheinander Schadpilze besser bekämpfen lassen, als mit den Einzelverbindungen allein.

Das 2-[2-(1-Chlorcyclopropyl)-3-(2-chlorphenyl)-2-hydroxypropyl]-2,4-dihydro-[1,2,4]-triazol-3-thion der Formel I ist aus der WO 96-16 048 bekannt. Die Verbindung kann in der "Thiono"-Form der Formel

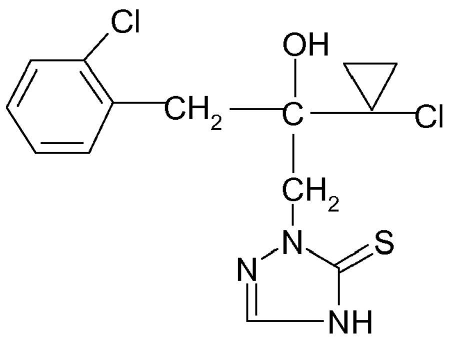

(I)

oder in der tautomeren "Mercapto"-Form der Formel

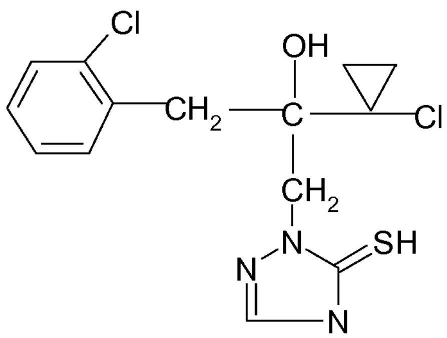

(Ia)

vorliegen. Der Einfachheit halber wird jeweils nur die "Thiono"-Form aufgeführt.

Das Metrafenone der Formel IV

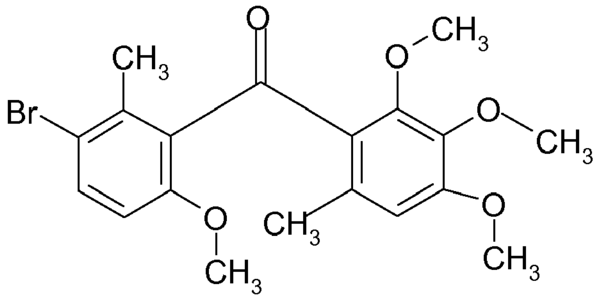

(IV)

ist aus der EP-A-727 141, EP-A-897 904, EP-A-899 255 und EP-A-967 196 bekannt.

Die Verbindung der Formel V

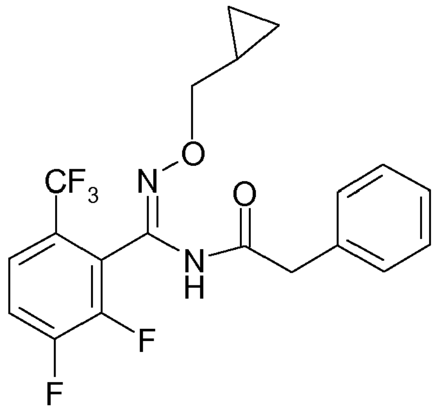

(V)

ist aus der WO 96/19442 bekannt.

Die Verbindung der Formel VI

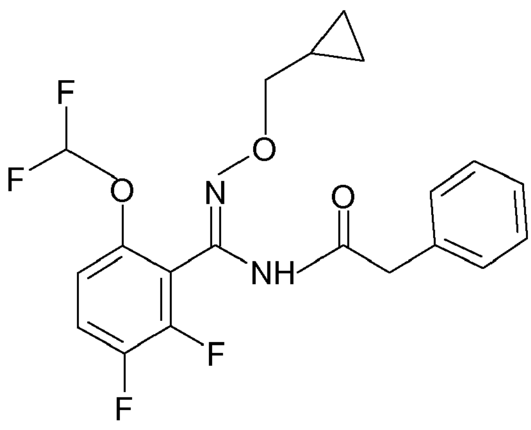

(VI)

ist in der EP-A-1017 670, EP-A-1017 671 und DE 197 535 19.4 beschrieben.

Das Quinoxyfen der Formel VII

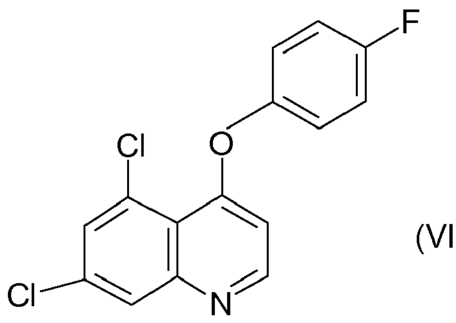

(VII)

ist aus der EP-A-0 326 330 bekannt.

Das Dithianon der Formel VIII

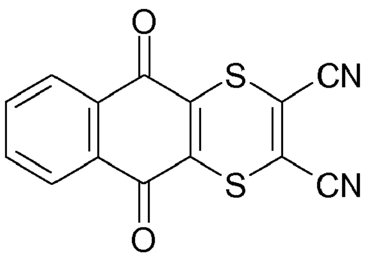

(VIII)

ist in der GB 857 383 beschrieben.

Das Thiram Formel IX

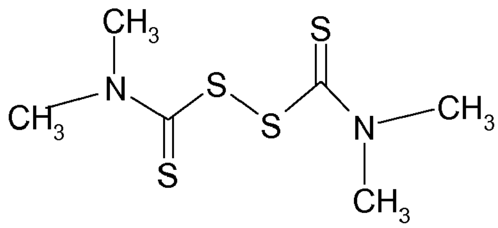

(IX)

ist aus der DE-A-06 42 532 bekannt.

Das Mepiquatchloride der Formel X

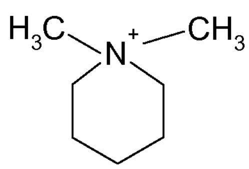

(X)

ist in der DE-A-22 07 575 beschrieben.

Das Cyazofamid der Formel XI

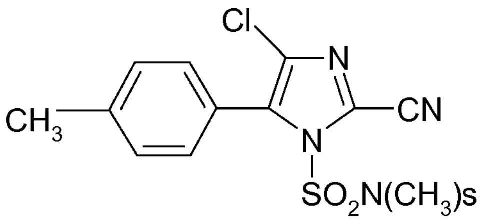

(XI)

ist in der PCT/EP/02/00237 beschrieben.

Das Fenoxanil der Formel XII

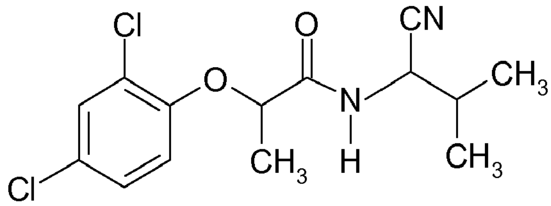

(XII)

ist in der PCT/EP/01/14785 beschrieben.

Eine Verbindung der Formel XIII

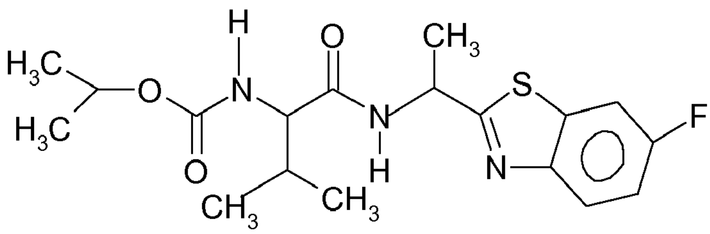

(XIII)

ist in der WO 99/56 551 beschrieben.

Thiophanate-methyl der Formel XIV

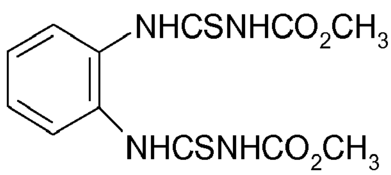

(XIV)

ist in der DE-A-1 930 540 beschrieben.

Das Carbendazim der Formel XV

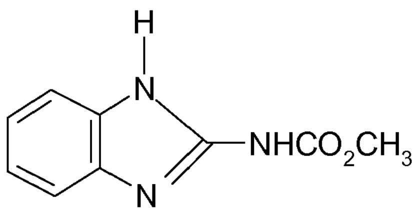

(XV)

ist in der US 3,657,443 beschrieben.

Das Metalaxyl der Formel XVI

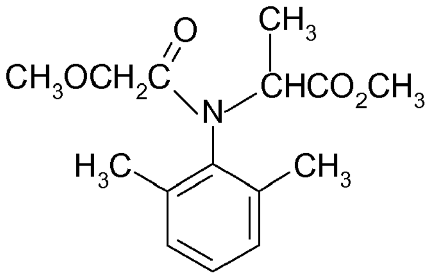

XVI

ist in der US 4,151,299 beschrieben.

Das Fludioxonil der Formel XVII

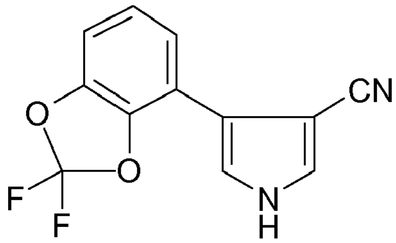

XVII

ist in der EP-A-206 999 beschrieben.

Das Thiabendazole der Formel XVIII

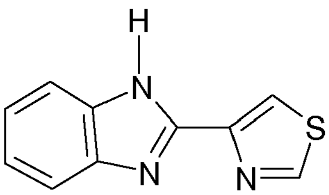

XVIII

ist in der US 3,017,415 beschrieben.

Das Quintozene der Formel XIX

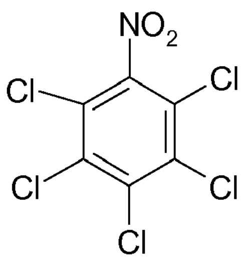

XIX

ist in der DE-A-682 048 beschrieben.

Das Prochloraz der Formel XX

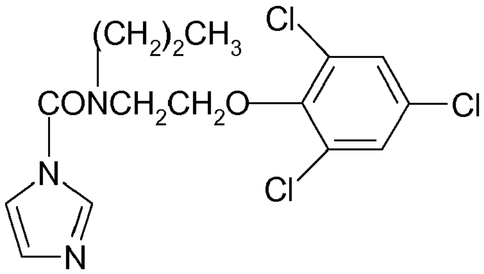

XX

ist in der US 3,991,071 beschrieben.

Das Anthraquinone der Formel XXI

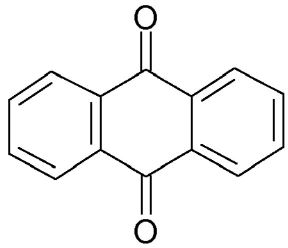

XXI

ist in Pesticide Manual, 12th Ed. (2000), Seite 39 beschrieben.

Bevorzugt sind auch Mischungen von Prothioconazole mit Metrafenone der Formel IV.

Bevorzugt sind weiterhin Mischungen von Prothioconazole mit der Verbindung der Formel V.

Bevorzugt sind weiterhin Mischungen von Prothioconazole mit der Verbindung der Formel VI.

Bevorzugt sind weiterhin Mischungen von Prothioconazole mit Quinoxyfen der Formel VII.

Bevorzugt sind weiterhin Mischungen von Prothioconazole mit Dithianon der Formel VIII.

Bevorzugt sind weiterhin Mischungen von Prothioconazole mit Thiram der Formel IX.

Bevorzugt sind weiterhin Mischungen von Prothioconazole mit Mepiquat chloride der Formel X.

Bevorzugt sind weiterhin Mischungen von Prothioconazole mit Cyazofamid der Formel XI.

Bevorzugt sind weiterhin Mischungen von Prothioconazole mit Fenoxanil der Formel XII.

Bevorzugt sind weiterhin Mischungen von Prothioconazole mit der Verbindung der Formel XIII.

Bevorzugt sind weiterhin Mischungen von Prothioconazole mit Thiophanate-methyl der Formel XVI.

Bevorzugt sind weiterhin Mischungen von Prothioconazole mit Carbendazim der Formel XV.

Bevorzugt sind weiterhin Mischungen von Prothioconazole mit Metalaxyl der Formel XVI.

Bevorzugt sind weiterhin Mischungen von Prothioconazole mit Fludioxonil der Formel XVII.

Bevorzugt sind weiterhin Mischungen von Prothioconazole mit Thiabendazole der Formel XVIII.

Bevorzugt sind weiterhin Mischungen von Prothioconazole mit Quintozene der Formel XIX.

Bevorzugt sind weiterhin Mischungen von Prothioconazole mit Prochloraz der Formel XX.

Bevorzugt sind weiterhin Mischungen von Prothioconazole mit Anthraquinone der Formel XXI.

Bevorzugt sind auch Mischungen von Prothioconazol mit zwei weiteren fungiziden Verbindungen der Formeln II bis XXI.

Die Verbindung I ist wegen des basischen Charakters der in ihr enthaltenen Stickstoffatome in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organischen Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder - disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc.

Als Metallionen kommen insbesondere die Ionen der Elemente der zweiten Hauptgruppe, insbesondere Calzium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink und andere in Betracht. Besonders bevorzugt sind die Metallionen der Elemente der Nebengruppen der vierten Periode. Die Metalle können dabei in den verschiedenen ihnen zukommenden Wertigkeiten vorliegen.

Bevorzugt setzt man bei der Bereitstellung der Mischungen die reinen Wirkstoffe I bis XXI ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Die Mischungen aus der Verbindung I mit mindestens einer der Verbindungen IV bis XXI bzw. die Verbindung I mit mindestens einer der Verbindungen IV bis XXI gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen, Tomaten, Kartoffeln und Kürbisgewächse), Gerste, Gras, Hafer, Bananen, Kaffee, Mais, Obstpflanzen, Reis, Roggen, Soja, Wein, Weizen, Zierpflanzen, Zuckerrohr sowie an einer Vielzahl von Samen.

Insbesondere eignen sie sich zur Bekämpfung der folgenden pflanzenpathogenen Pilze: Blumeria graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zuckerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Pseudoperonospora-Arten in Hopfen und Gurken, Alternaria-Arten an Gemüse und Obst, Mycosphaerella-Arten in Bananen sowie Fusarium- und Verticillium-Arten.

Die Verbindung I und mindestens eine der Verbindungen IV bis XIII können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Die Verbindungen I und IV werden üblicherweise in einem Gewichtsverhältnis von 20:1 bis 1:20, insbesondere 10:1 bis 1:10, vorzugsweise 5:1 bis 1:5 angewendet.

Die Verbindungen I und V werden üblicherweise in einem Gewichtsverhältnis von 20:1 bis 1:20, insbesondere 10:1 bis 1:10, vorzugsweise 5:1 bis 1:5 angewendet.

Die Verbindungen I und VI werden üblicherweise in einem Gewichtsverhältnis von 20:1 bis 1:20, insbesondere 10:1 bis 1:10, vorzugsweise 5:1 bis 1:5 angewendet.

Die Verbindungen I und VII werden üblicherweise in einem Gewichtsverhältnis von 20:1 bis 1:20, insbesondere 10:1 bis 1:10, vorzugsweise 5:1 bis 1:5 angewendet.

Die Verbindungen I und VIII werden üblicherweise in einem Gewichtsverhältnis von 20:1 bis 1:20, insbesondere 10:1 bis 1:10, vorzugsweise 5:1 bis 1:5 angewendet.

Die Verbindungen I und IX werden üblicherweise in einem Gewichtsverhältnis von 20:1 bis 1:20, insbesondere 10:1 bis 1:10, vorzugsweise 5:1 bis 1:5 angewendet.

Die Verbindungen I und X werden üblicherweise in einem Gewichtsverhältnis von 20:1 bis 1:20, insbesondere 10:1 bis 1:10, vorzugsweise 5:1 bis 1:5 angewendet.

Die Verbindungen I und XI werden üblicherweise in einem Gewichtsverhältnis von 20:1 bis 1:20, insbesondere 10:1 bis 1:10, vorzugsweise 5:1 bis 1:5 angewendet.

Die Verbindungen I und XII werden üblicherweise in einem Gewichtsverhältnis von 20:1 bis 1:20, insbesondere 10:1 bis 1:10, vorzugsweise 5:1 bis 1:5 angewendet.

Die Verbindungen I und XIII werden üblicherweise in einem Gewichtsverhältnis von 20:1 bis 1:20, insbesondere 10:1 bis 1:10, vorzugsweise 5:1 bis 1:5 angewendet.

Die Verbindungen I und XIV werden üblicherweise in einem Gewichtsverhältnis von 20:1 bis 1:20, insbesondere 10:1 bis 1:10, vorzugsweise 5:1 bis 1:5 angewendet.

Die Verbindungen I und XV werden üblicherweise in einem Gewichtsverhältnis von 20:1 bis 1:20, insbesondere 10:1 bis 1:10, vorzugsweise 5:1 bis 1:5 angewendet.

Die Verbindungen I und XVI werden üblicherweise in einem Gewichtsverhältnis von 20:1 bis 1:20, insbesondere 10:1 bis 1:10, vorzugsweise 5:1 bis 1:5 angewendet.

Die Verbindungen I und XVII werden üblicherweise in einem Gewichtsverhältnis von 20:1 bis 1:20, insbesondere 10:1 bis 1:10, vorzugsweise 5:1 bis 1:5 angewendet.

Die Verbindungen I und XVIII werden üblicherweise in einem Gewichtsverhältnis von 20:1 bis 1:20, insbesondere 10:1 bis 1:10, vorzugsweise 5:1 bis 1:5 angewendet.

Die Verbindungen I und XIX werden üblicherweise in einem Gewichtsverhältnis von 20:1 bis 1:20, insbesondere 10:1 bis 1:10, vorzugsweise 5:1 bis 1:5 angewendet.

Die Verbindungen I und XX werden üblicherweise in einem Gewichtsverhältnis von 20:1 bis 1:20, insbesondere 10:1 bis 1:10, vorzugsweise 5:1 bis 1:5 angewendet.

Die Verbindungen I und XXI werden üblicherweise in einem Gewichtsverhältnis von 20:1 bis 1:20, insbesondere 10:1 bis 1:10, vorzugsweise 5:1 bis 1:5 angewendet.

Die Aufwandmengen der erfindungsgemäßen Mischungen liegen, vor allem bei landwirtschaftlichen Kulturflächen, je nach Art des gewünschten Effekts bei 0,01 bis 8 kg/ha, vorzugsweise 0,1 bis 5 kg/ha, insbesondere 0,1 bis 3,0 kg/ha.

Die Aufwandmengen liegen dabei für die Verbindungen I bei 0,01 bis 1 kg/ha, vorzugsweise 0,05 bis 0,5 kg/ha, insbesondere 0,05 bis 0,3 kg/ha.

Die Aufwandmengen für die Verbindungen IV liegen entsprechend bei 0,01 bis 1 kg/ha, vorzugsweise 0,02 bis 0,5 kg/ha, insbesondere 0,05 bis 0,3 kg/ha.

Die Aufwandmengen für die Verbindungen V liegen entsprechend bei 0,01 bis 1 kg/ha, vorzugsweise 0,02 bis 0,5 kg/ha, insbesondere 0,05 bis 0,3 kg/ha.

Die Aufwandmengen für die Verbindungen VI liegen entsprechend bei 0,01 bis 1 kg/ha, vorzugsweise 0,02 bis 0,5 kg/ha, insbesondere 0,05 bis 0,3 kg/ha.

Die Aufwandmengen für die Verbindungen V liegen entsprechend bei 0,01 bis 1 kg/ha, vorzugsweise 0,02 bis 0,5 kg/ha, insbesondere 0,05 bis 0,3 kg/ha.

Die Aufwandmengen für die Verbindungen VII liegen entsprechend bei 0,01 bis 1 kg/ha, vorzugsweise 0,02 bis 0,5 kg/ha, insbesondere 0,05 bis 0,3 kg/ha.

Die Aufwandmengen für die Verbindungen VIII liegen entsprechend bei 0,01 bis 1 kg/ha, vorzugsweise 0,02 bis 0,5 kg/ha, insbesondere 0,05 bis 0,3 kg/ha.

Die Aufwandmengen für die Verbindungen IX liegen entsprechend bei 0,01 bis 1 kg/ha, vorzugsweise 0,02 bis 0,5 kg/ha, insbesondere 0,05 bis 0,3 kg/ha.

Die Aufwandmengen für die Verbindungen X liegen entsprechend bei 0,01 bis 1 kg/ha, vorzugsweise 0,02 bis 0,5 kg/ha, insbesondere 0,05 bis 0,3 kg/ha.

Die Aufwandmengen für die Verbindungen XI liegen entsprechend bei 0,01 bis 1 kg/ha, vorzugsweise 0,02 bis 0,5 kg/ha, insbesondere 0,05 bis 0,3 kg/ha.

Die Aufwandmengen für die Verbindungen XII liegen entsprechend bei 0,01 bis 1 kg/ha, vorzugsweise 0,02 bis 0,5 kg/ha, insbesondere 0,05 bis 0,3 kg/ha.

Die Aufwandmengen für die Verbindungen XIII liegen entsprechend bei 0,01 bis 1 kg/ha, vorzugsweise 0,02 bis 0,5 kg/ha, insbesondere 0,05 bis 0,3 kg/ha.

Die Aufwandmengen für die Verbindungen XIV liegen entsprechend bei 0,01 bis 1 kg/ha, vorzugsweise 0,02 bis 0,5 kg/ha, insbesondere 0,05 bis 0,3 kg/ha.

Die Aufwandmengen für die Verbindungen XV liegen entsprechend bei 0,01 bis 1 kg/ha, vorzugsweise 0,02 bis 0,5 kg/ha, insbesondere 0,05 bis 0,3 kg/ha.

Die Aufwandmengen für die Verbindungen XVI liegen entsprechend bei 0,01 bis 1 kg/ha, vorzugsweise 0,02 bis 0,5 kg/ha, insbesondere 0,05 bis 0,3 kg/ha.

Die Aufwandmengen für die Verbindungen XVII liegen entsprechend bei 0,01 bis 1 kg/ha, vorzugsweise 0,02 bis 0,5 kg/ha, insbesondere 0,05 bis 0,3 kg/ha.

Die Aufwandmengen für die Verbindungen XVIII liegen entsprechend bei 0,01 bis 1 kg/ha, vorzugsweise 0,02 bis 0,5 kg/ha, insbesondere 0,05 bis 0,3 kg/ha.

Die Aufwandmengen für die Verbindungen XIX liegen entsprechend bei 0,01 bis 1 kg/ha, vorzugsweise 0,02 bis 0,5 kg/ha, insbesondere 0,05 bis 0,3 kg/ha.

Die Aufwandmengen für die Verbindungen XX liegen entsprechend bei 0,01 bis 1 kg/ha, vorzugsweise 0,02 bis 0,5 kg/ha, insbesondere 0,05 bis 0,3 kg/ha.

Die Aufwandmengen für die Verbindungen XXI liegen entsprechend bei 0,01 bis 1 kg/ha, vorzugsweise 0,02 bis 0,5 kg/ha, insbesondere 0,05 bis 0,3 kg/ha.

Bei der Saatgutbehandlung werden im allgemeinen Aufwandmengen an Mischung von 0,001 bis 250 g/kg Saatgut, vorzugsweise 0,01 bis 100 g/kg, insbesondere 0,01 bis 50 g/kg verwendet.

Sofern für Pflanzen pathogene Schadpilze zu bekämpfen sind, erfolgt die getrennte oder gemeinsame Applikation der Verbindung I und mindestens einer der Verbindungen IV bis XXI oder der Mischungen aus der Verbindung I mit mindestens einer der Verbindungen IV bis XXI durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindung I und mindestens einer der Verbindungen IV bis XXI können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindung I und mindestens eine der Verbindungen IV bis XXI oder der Mischung aus der Verbindung I mit mindestens einer der Verbindungen IV bis XXI mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% der Verbindung I und mindestens eine der Verbindungen IV bis XXI bzw. der Mischung aus der Verbindung I mit mindestens einer der Verbindungen IV bis XXI. Die Wirkstoffe werden dabei in einer Reinheit von 90% bis 100%, vorzugsweise 95% bis 100% (nach NMR- oder HPLC-Spektrum) eingesetzt.

Die Anwendung der Verbindung I mit mindestens einer der Verbindungen IV bis XXI der Mischungen oder der entsprechenden Formulierungen erfolgt so, daß man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Verbindung I mit mindestens einer der Verbindungen IV bis XXI bei getrennter Ausbringung, behandelt.

Die Anwendung kann vor oder nach dem Befall durch die Schadpilze erfolgen.

Anwendungsbeispiel

Die synergistische Wirkung der erfindungsgemäßen Mischungen ließ sich durch die folgenden Versuche zeigen:

Die Wirkstoffe wurden getrennt oder gemeinsam als 10%ige Emulsion in einem Gemisch aus 85 Gew.-% Cyclohexanon und 5 Gew.-% Emulgator aufbereitet und entsprechend der gewünschten Konzentration mit Wasser verdünnt.

Die Auswertung erfolgte durch Feststellung der befallenen Blattflächen in Prozent. Diese Prozent-Werte wurden in Wirkungsgrade umgerechnet. Der Wirkungsgrad (W) wurde nach der Formel von Abbot wie folgt bestimmt:

$$W = \left(1 - \frac{\alpha}{\beta}\right) \cdot 100$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

$$\text{Colby Formel: } E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Anwendungsbeispiel 1: Wirksamkeit gegen Weizenmehltau verursacht durch Erysiphe [syn. Blumeria] graminis forma specialis. tritici

Blätter von in Töpfen gewachsenen Weizenkeimlingen der Sorte "Kanzler" wurden mit wässriger Wirkstoffaufbereitung, die aus einer Stammlösung bestehend aus 10 % Wirkstoff, 85 % Cyclohexanon und 5 % Emulgiermittel angesetzt wurde, bis zur Tropfnässe besprüht und 24 Stunden nach dem Antrocknen des Spritzbelages mit Sporen des Weizenmehltaus (Erysiphe [syn. Blumeria] graminis forma specialis. tritici) bestäubt. Die Versuchspflanzen wurden anschließend im Gewächshaus bei Temperaturen zwischen 20 und 24_ C und 60 bis 90 % relativer Luftfeuchtigkeit aufgestellt. Nach 7 Tagen wurde das Ausmaß der Mehltauentwicklung visuell in % Befall der gesamten Blattfläche ermittelt.

Die visuell ermittelten Werte für den Prozentanteil befallener Blattflächen wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der obengenannten Colby-Formel ermittelt und mit den beobachteten Wirkungsgraden verglichen.

Tabelle 1

| Wirkstoff | Wirkstoffkonzentration in der Spritzbrühe in ppm | Wirkungsgrad in % der unbehandelten Kontrolle |
|---|---|---|
| Kontrolle (unbehandelt) | (90 % Befall) | 0 |
| Verbindung I = Prothioconazole | 4<br>1<br>0,25 | 42<br>0<br>0 |
| Verbindung IV = Metrafenone | 0,06<br>0,015 | 53<br>30 |
| Verbindung VI | 0,25<br>0,06 | 53<br>0 |
| Verbindung VII = Dithianon | 4<br>1<br>0,25 | 0<br>0 |
| Verbindung XI = Cyazofamid | 1<br>0,25<br>0,06 | 22<br>22<br>0 |

Tabelle 2

| Erfindungsgemäße Kombinationen | Beobachteter Wirkungsgrad | Berechneter Wirkungsgrad*) |
|---|---|---|
| Verbindung I = Prothioconazole + Verbindung IV Metrafenone<br>0,25 + 0,06 ppm<br>Mischung 4 : 1 | 65 | 53 |

(fortgesetzt)

| Erfindungsgemäße Kombinationen | Beobachteter Wirkungsgrad | Berechneter Wirkungsgrad*) |
|---|---|---|
| Verbindung I = Prothioconazole + Verbindung IV Metrafenone<br>1 + 0,06 ppm<br>Mischung 16: 1 | 65 | 53 |
| Verbindung I = Prothioconazole + Verbindung IV Metrafenone<br>0,25 + 0,015<br>ppm Mischung 16 : 1 | 42 | 30 |
| Verbindung I = Prothioconazole + Verbindung VI<br>1 + 0,25 ppm<br>Mischung 1 : 16 | 65 | 53 |
| Verbindung I = Prothioconazole + Verbindung VI<br>0,25 + 0,06 ppm<br>Mischung 4 : 1 | 18 | 0 |
| Verbindung I = Prothioconazole + Verbindung VI<br>0,25 + 0,06 ppm<br>Mischung 4 : 1 | 18 | 0 |
| Verbindung I = Prothioconazole + Verbindung VI<br>4 + 0,25 ppm<br>Mischung 16 : 1 | 88 | 77 |
| Verbindung I = Prothioconazole + Verbindung VII = Dithianon<br>0,25 + 4 ppm<br>Mischung 1 : 16 | 33 | 0 |
| Verbindung I = Prothioconazole + Verbindung VII = Dithianon<br>1 + 4 ppm<br>Mischung 1 : 4 | 33 | 0 |
| Verbindung I = Prothioconazole + Verbindung VII = Dithianon<br>0,25 + 0,25 ppm<br>Mischung 1 : 1 | 97 | 0 |
| Verbindung I = Prothio-conazole + Verbindung VII = Dithianon<br>1 + 0,25 ppm<br>Mischung 4 : 1 | 22 | 0 |
| Verbindung I = Prothioconazole + Verbindung XI = Cyazofamid<br>0,06 + 1 ppm<br>Mischung 16 : 1 | 56 | 22 |
| Verbindung I = Prothioconazole + Verbindung XI = Cyazofamid<br>1 + 0,25 ppm<br>Mischung 4 : 1 | 56 | 22 |
| Verbindung I = Prothioconazole + Verbindung XI = Cyazofamid<br>1 + 0,25 ppm<br>Mischung 4 : 1 | 33 | 22 |

(fortgesetzt)

| Erfindungsgemäße Kombinationen | Beobachteter Wirkungsgrad | Berechneter Wirkungsgrad*) |
|---|---|---|
| Verbindung I = Prothioconazole + Verbindung XI = Cyazofamid<br>1 + 0,06 ppm<br>Mischung 16 : 1 | 22 | 0 |
| *) berechneter Wirkungsgrad nach der Colby-Formel | | |

Aus den Ergebnissen des Versuches geht hervor, daß der beobachtete Wirkungsgrad in allen Mischungsverhältnissen höher ist, als nach der Colby-Formel vorausberechnete Wirkungsgrad (aus Synerg 176. XLS).

Anwendungsbeispiel 2 : Protektive Wirksamkeit gegen den durch Sphaerotheca fuliginea verursachten Gurkenmehltau

Blätter von in Töpfen gewachsenen Gurkenkeimlingen der Sorte "Chinesische Schlange" wurden im Keimblattstadium mit wässriger Wirkstoffaufbereitung, die aus einer Stammlösung bestehend aus 10 % Wirkstoff, 85 % Cyclohexanon und 5 % Emulgiermittel angesetzt wurde, bis zur Tropfnässe besprüht. 20 Stunden nach dem Antrocknen des Spritzbelages wurden die Pflanzen mit einer wsrigen Sporensuspension des Gurkenmehltaus (Sphaerotheca fuliginea) inokuliert. Anschließend wurden die Pflanzen im Gewächshaus bei Temperaturen zwischen 20 und 24_ C und 60 bis 80 % relativer Luftfeuchtigkeit für 7 Tage kultiviert. Dann wurde das Ausmaß der Mehltauentwicklung visuell in %-Befall der Keimblattfläche ermittelt.

Die visuell ermittelten Werte für den Prozentanteil befallener Blattflächen wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der obengenannten Colby-Formel ermittelt und mit den beobachteten Wirkungsgraden verglichen.

Tabelle 3

| Wirkstoff | Wirkstoffkonzentration in der Spritzbrühe in ppm | Wirkungsgrad in % der unbehandelten Kontrolle |
|---|---|---|
| Kontrolle (unbehandelt) | (90 % Befall) | 0 |
| Verbindung I<br>= Prothioconazole | 1<br>0,25 | 78<br>56 |
| Verbindung IV<br>= Metrafenone | 0,06<br>0,015 | 0<br>0 |
| Verbindung VI | 0,06<br>0,015 | 33<br>0 |

Tabelle 4

| Erfindungsgemäße Kombinationen | Beobachteter Wirkungsgrad | Berechneter Wirkungsgrad*) |
|---|---|---|
| Verbindung I = Prothioconazole + Verbindung IV= Metrafenone<br>0,25 + 0,06 ppm<br>Mischung 4 : 1 | 78 | 56 |
| Verbindung I = Prothioconazole + Verbindung IV= Metrafenone<br>1 + 0,06 ppm<br>Mischung 16 : 1 | 94 | 78 |
| Verbindung I = Prothio-conazole + Verbindung IV= Metrafenone<br>0,25 + 0,015 ppm<br>Mischung 16 : 1 | 78 | 56 |

(fortgesetzt)

| Erfindungsgemäße Kombinationen | Beobachteter Wirkungsgrad | Berechneter Wirkungsgrad*) |
|---|---|---|
| Verbindung I = Prothioconazole + Verbindung VI<br>0,25 + 0,06 ppm<br>Mischung 4 : 1 | 89 | 70 |
| Verbindung I = Prothioconazole + Verbindung VI<br>0,25 + 0,015 ppm<br>Mischung 16 : 1 | 72 | 56 |
| *) berechneter Wirkungsgrad nach der Colby-Formel | | |

Aus den Ergebnissen des Versuches geht hervor, daß der beobachtete Wirkungsgrad in allen Mischungsverhältnissen höher ist, als nach der Colby-Formel vorausberechnete Wirkungsgrad (aus Synerg 176. XLS).

**Patentansprüche**

1. Fungizide Mischung, enthaltend

   (1) 2-[2-(1-Chlorcyclopropyl)-3-(2-chlorphenyl)-2-hydroxypropyl]-2,4-dihydro-[1,2,4]-triazol-3-thion (Prothioconazol) der Formel I oder dessen Salze oder Addukte

   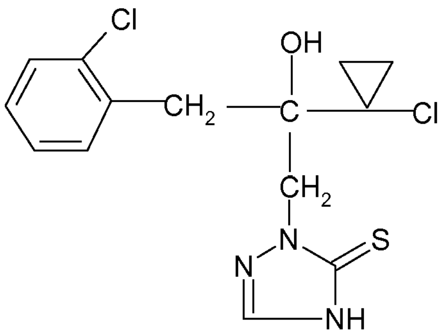

   (I)

   (Prothioconazol)

   und
   (14) Thiophanate-methyl der Formel XIV

   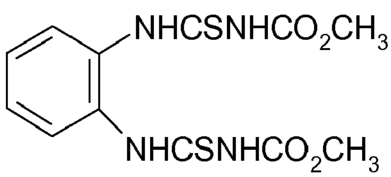

   (XIV)

   in einer synergistisch wirksamen Menge.

2. Fungizide Mischung nach Anspruch 1, **dadurch gekennzeichnet, dass** das Gewichtsverhältnis von Prothioconazole der Formel I zu Thiophanate-methyl der Formel XIV 20 : 1 bis 1 : 20 beträgt.

3. Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit der fungiziden Mischung gemäß Anspruch 1 behandelt.

**4.** Verfahren nach Anspruch 3, **dadurch gekennzeichnet, daß** man die Verbindung der Formel I gemäß Anspruch 1 und eine Verbindung der Formel XIV gemäß Anspruch 1 gleichzeitig, und zwar gemeinsam oder getrennt, oder nacheinander ausbringt.

**5.** Verfahren nach Anspruch 3 oder 4, **dadurch gekennzeichnet, daß** man die fungizide Mischung oder die Verbindung der Formel I mit einer Verbindung der Formel XIV gemäß Anspruch 1 in einer Menge von 0,01 bis 8 kg/ha aufwendet.

**6.** Fungizide Mittel, enthaltend die fungizide Mischung gemäß Anspruch 1 sowie einen festen oder flüssigen Träger.

Europäisches Patentamt
European Patent Office
Office européen des brevets

# EUROPÄISCHER RECHERCHENBERICHT

Nummer der Anmeldung
EP 10 18 1197

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | WO 98/47367 A (STENZEL KLAUS ;BAYER AG (DE); DUTZMANN STEFAN (DE); JAUTELAT MANFR) 29. Oktober 1998 (1998-10-29)<br>* das ganze Dokument *<br>----- | 1 | INV.<br>A01N43/653<br>A01P3/00<br><br>ADD.<br>A01N47/34 |
| A | EP 0 677 246 A1 (KUREHA CHEMICAL IND CO LTD [JP]) 18. Oktober 1995 (1995-10-18)<br>* das ganze Dokument *<br>----- | 1 | |
| | | | RECHERCHIERTE SACHGEBIETE (IPC) |
| | | | A01N |

Der vorliegende Recherchenbericht wurde für alle Patentansprüche erstellt

| Recherchenort | Abschlußdatum der Recherche | Prüfer |
|---|---|---|
| München | 17. Januar 2011 | Bertrand, Franck |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................
& : Mitglied der gleichen Patentfamilie, übereinstimmendes Dokument

1

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 10 18 1197

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-01-2011

| Im Recherchenbericht angeführtes Patentdokument | Datum der Veröffentlichung | Mitglied(er) der Patentfamilie | Datum der Veröffentlichung |
|---|---|---|---|
| WO 9847367 A | 29-10-1998 | AT 214230 T | 15-03-2002 |
| | | AU 727186 B2 | 07-12-2000 |
| | | AU 7522098 A | 13-11-1998 |
| | | BR 9809100 A | 01-08-2000 |
| | | CA 2286772 A1 | 29-10-1998 |
| | | CA 2721222 A1 | 29-10-1998 |
| | | CN 1252690 A | 10-05-2000 |
| | | CZ 9903696 A3 | 16-02-2000 |
| | | DE 19716257 A1 | 22-10-1998 |
| | | DE 59803337 D1 | 18-04-2002 |
| | | DE 122008000040 I2 | 06-11-2008 |
| | | DK 975219 T3 | 01-07-2002 |
| | | EE 9900500 A | 15-06-2000 |
| | | EP 0975219 A1 | 02-02-2000 |
| | | ES 2172143 T3 | 16-09-2002 |
| | | HK 1026822 A1 | 27-02-2004 |
| | | HU 0001682 A2 | 28-09-2000 |
| | | ID 22820 A | 09-12-1999 |
| | | IL 131900 A | 25-07-2004 |
| | | JP 4094067 B2 | 04-06-2008 |
| | | JP 2001520665 T | 30-10-2001 |
| | | NL 350024 I1 | 01-03-2006 |
| | | NL 350031 I1 | 01-02-2007 |
| | | NZ 500367 A | 29-09-2000 |
| | | PL 336226 A1 | 19-06-2000 |
| | | PT 975219 E | 30-09-2002 |
| | | SK 143599 A3 | 12-06-2000 |
| | | TR 9902400 T2 | 21-01-2000 |
| | | TW 505504 B | 11-10-2002 |
| | | US 6306850 B1 | 23-10-2001 |
| | | ZA 9803236 A | 22-10-1998 |
| EP 0677246 A1 | 18-10-1995 | JP 3417995 B2 | 16-06-2003 |
| | | JP 7277909 A | 24-10-1995 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9616048 A
- WO 9847367 A
- EP 727141 A
- EP 897904 A
- EP 899255 A
- EP 967196 A
- WO 9619442 A
- EP 1017670 A
- EP 1017671 A
- DE 19753519
- EP 0326330 A
- GB 857383 A
- DE 0642532 A
- DE 2207575 A
- EP 0200237 W
- EP 0114785 W
- WO 9956551 A
- DE 1930540 A
- US 3657443 A
- US 4151299 A
- EP 206999 A
- US 3017415 A
- DE 682048 A
- US 3991071 A


### In der Beschreibung aufgeführte Nicht-Patentliteratur


- Pesticide Manual. 2000, 39
- **R.S. Colby.** *Weeds,* 1967, vol. 15, 20-22